# EUROPEAN PATENT APPLICATION

(11) **EP 2 182 296 A2**
(43) Date of publication of application: **05.05.2010**
(21) Application number: 09174337.7
(22) Date of filing: 28.10.2009
(51) Int. Cl.: F24D 10/00

(54) **District heating arrangement and method**

(30) Priority: 28.10.2008 FI 20086020; 28.10.2008 FI 20080594
(71) Applicant: Oy Scancool Ab, 67 100 Kokkola (FI)
(72) Inventor: Kohtanen, Raimo, 60720 Tuomikylä (FI); Seinelä, Altti, 04260 Kerava (FI); Jaaksi, Petri, 04340 Tuusula (FI); Asplund, Jonny, 68600 Pietarsaari (FI); Aaltola, Juha, 08500 Lohja (FI); Wargh, Stefan, 67400 Kokkola (FI); Olaussen, Fredrik, 67600 Kokkola (FI)
(74) Representative: Helino, Timo Kalervo

(57) **Abstract**

The invention relates to an arrangement (1) for connecting a second district heating network (20) to a first district heating network (2), both district heating networks comprising a heated main supply flow (4, 24) and a main return flow (5, 25) that has released heat, both flows being formed by a heating medium, as well as an object supply flow (7, 27) conducted from the main supply flow of the network to each object (6, 26) to be heated by the network, and an object return flow (9, 29) that returns from the object after having released heat and is conducted to the main return flow of the network. According to the invention, the arrangement (1) comprises a heat pump apparatus (10, 12, 13) arranged to heat the main supply flow (24) of the second district heating network (20) by heat derived from the main return flow (5) of the first district heating network (2).

## Description

### FIELD OF THE INVENTION

The invention relates to district heating networks and equivalent heat transmission arrangements which produce heat energy in a centralized manner and distribute it by means of a medium that flows in the heat transmission pipework.

### BACKGROUND OF THE INVENTION

In heat transmission arrangements that produce heat in a centralized manner, such as district heating networks, the heat energy is produced in power plants, such as either thermal power plants which focus merely on heat production or so-called combined heat and power plants (CHP) which produce both electric and heat energy simultaneously. In the latter, electricity is conducted to an electrical network and heat energy in conducted by means of water (or other heat transmission medium) to a district heating network that consists of pipeworks for the supply and the return water. A high-temperature and high-discharge flow of water or other heat transmission medium leaves the power plant in the main outlet of the network and is divided into small subflows to each heating object within the network. In the heat exchanger of an object, this subflow releases heat to the object's heating system. A subflow that has cooled in the heat exchanger is returned to the main network of the district heating network, into the return flow.

The district heating network and heat production are so designed that there is first of all enough heat energy transmitted by water for all objects heated by the network. The maximum heat energy to be transmitted depends on the temperature and the discharge of the supply water that leaves the power plant. Secondly, the temperature of the supply water as it reaches the heating object should normally exceed a specific predetermined threshold value, which for example in the case of heating of residential buildings is 60...85°C. This sets limits to the efficiency of the production of electricity in the power plant, which is typically reduced as the temperatures of the supply and the return water rise.

When it is desirable to add new heating objects to an existing district heating network either by extending the area of the network to new regions or by connecting new heat consumers to the network within the area of the existing network, said heat production and transmission must be redesigned. In other words, it must be possible to transmit a larger amount of heat energy, and the temperature of the supply water to the new objects must exceed said threshold value. In the prior art, the transmission of the heat energy is increased by raising the temperature and/or adding the discharge of the supply water that leaves the power plant. However, for different reasons, this may be difficult to carry out and involves additional costs. For example, the discharge within the pipes cannot necessarily be increased without reconstructing the pipework which is an extremely heavy procedure. On the other hand, increasing the temperature of the supply water reduces the efficiency of the production of electricity in a CHP plant. Respectively, the temperature of the return water that returns to the power plant may rise by the same token, which also contributes negatively to the efficiency of the production of electricity.

On the other hand, it may turn out as early as at the design phase that the available power plant or main line capacity which is determined by a number of factors is only sufficient for a district heating network of a specific size or a specific number of heating objects within the network. If the actual need is greater than this, it is obviously possible to provide the network in two sections, both with their proper power plants. However, this is in many cases a solution too heavy and expensive, in particular if the required additional capacity was only slightly greater than the available capacity, in which case one subnet-wok could be provided as substantially smaller than the other one.

### OBJECTIVE OF THE INVENTION

The objective of the invention is to provide a solution to the situations described above.

### SUMMARY OF THE INVENTION

The basic principle of the invention is to connect two district heating networks together so that the heat needed by one of the district heating networks is drawn from the cooled return flow of the other district heating network. More specifically, the arrangement and the method of the invention are characterized by what has been presented in claims 1 and 8.

Firstly, the invention relates to an arrangement for connecting a second district heating network to a first district heating network, the first and the second district heating networks both comprising a heated main supply flow and a main return flow that has released heat, both formed by a heating medium, as well as an object supply flow conducted from the network's main supply flow to each object to be heated by that network and an object return flow that returns from the object after having released heat and is conducted to the network's main return flow.

In practice, the most typical embodiment of the arrangement of the invention is the case where the "second" district heating network is a new extension/addition to an existing original "first" district heating network. On the other hand, it is also possible that the first and the second network are designed and implemented simultaneously as originally parallel networks. The invention is best suited for situations where the second network is smaller in size and heat transmission requirements than the first one. The heating medium may be for example water. As stated above, the invention relates to networks wherein the main line is formed by a hotter main supply flow and a main return flow of a lower temperature, wherein the flows have a substantially constant temperature in the normal state, as well as by heating objects coupled in parallel to the main line. The heating medium in such a district heating network is typically provided with heat energy from a thermal power plant which may be a plant that focuses on the production of heat alone or a so-called combined heat and power plant (CHP) that produces both heat and electricity. An individual object that is to be heated, i.e. that receives heat, is typically a residential or industrial building, but it may be any object that consumes heat energy. Besides, the ultimate use of the heat energy is not essential in the invention.

In the arrangement of the invention, a number of heating objects are connected at least to the first district heating network. In some embodiments, the second network may comprise only one heating object, for example in the case where a new consumer is added to the area of an existing network. The actual release of the heat takes place in a heat exchanger provided in the heating object for this purpose. In a typical solution, the heat is transmitted to the object's internal liquid heating medium circulation in the heat exchanger.

According to the invention, the arrangement comprises a heat pump apparatus arranged to heat the main supply flow of the second district heating network by heat drawn from the main return flow of the original district heating network.

As is obvious to the person skilled in the art, the heat pump refers generally to a refrigerant circuit comprising a compressor, a condenser, an expansion valve and an evaporator for circulating the refrigerant therein. According to the operating principle of the heat pump, the refrigerant binds heat from a first heat storage as it is heated and evaporated in the evaporator and releases it to the ambient environment in a second heat storage as it is cooled and condensed from steam back to liquid in the condenser. The compressor is operated by electricity. One essential parameter describing the operation of the heat pump is therefore the coefficient of performance which indicates how much heat energy the heat pump releases to the heat side relative to the electric energy supplied to the system from the compressor. In the invention, the heat-releasing heat storage is represented by the main return flow of the first district heating network and the receiving heat storage is represented by the main supply flow of the second district heating network, which is preferably heated to a substantially same temperature as the main supply flow of the first district heating network as it has the same purpose. In addition to a heat pump, the heat pump apparatus may obviously include a number of pipeworks, pumps and other means required in practice to provide said heat transmission between the district heating networks. These means may be implemented by devices known per se and their details are not relevant for the basic idea of the invention.

The solution according to the invention in which the main supply flow of the second district heating network is heated by heat from the main return flow of the first network provides considerable advantages as compared to the prior art. In a situation where the second district heating network is an extension/addition connected to the first network, the district heating network may be extended without having to reconstruct the main pipework of the original network or even raise the temperature of the discharge and/or the supply flow of the original network, the latter alternative, for example, possibly reducing the efficiency of the power plant as stated above. As to the efficiency of the heat-producing power plant, the invention has even an ameliorating effect. This is because deriving heat from the main return network obviously lowers the temperature of the main return flow that returns to the power plant. In the case of a power plant that focuses merely on heat production, this leads to the increase in the boiler efficiency of the power plant as the cooler return flow is able to cool the flue gases from the boiler room to a lower temperature than normally. In a CHP power plant, on the other hand, the lower temperature of the return flow increases the efficiency in the production of electricity. On the other hand, an extension/addition of the district heating network that is typically smaller in size than the original network does not require a separate heat source if the entire heat energy transmitted by the additional network can be derived from the main return flow of the original network. By all means, it is also possible that the second network have its own separate heat source, in which case the heat energy for this network is produced by the heat source and the heat energy transmitted by the heat pump together. In this case, the proportion of the heat energy produced by the heat pump reduces the power required of the separate heat source.

In one preferred embodiment of the invention, the arrangement comprises adjusting means for transmitting additional heat from the main supply flow of the first district heating network to the main supply flow of the second district heating network so as to adjust the heat flows in the arrangement where necessary. In other words, in this embodiment it is possible, in addition to the heat derived by the heat pump from the main return flow of the first network, to derive heat directly from the main supply flow of the first network, where necessary. The adjusting means may include for example a heat exchanger and the necessary pipework to transmit the heat between the main supply flows of the first and the second network. It is also possible to mix the heating medium directly to the main supply flow of the second network from the main supply flow of the first network, in which case the adjusting means may comprise for example pipeworks and valves.

There are a number of situations where the above-described, preferably temporary or periodical, transmission of additional heat may be needed. Firstly, the heat pump is limited in terms of how high a temperature it can reach to heat the supply flow of the second district heating network. In case a higher temperature is required in a specific situation, the required additional heating can be provided by the additional heat derived from the main supply flow of the first network, provided, of course, that the temperature of that flow is higher than the temperature produced by the heat pump. Another embodiment of the additional heat concerns situations where the heating of the first network is provided by a CHP plant that produces both heat and electricity. The amount of electricity produced in such a plant depends on the produced heat energy. In the case where it would be desirable to increase the production of electricity for example during the daytime due to a higher price gained from the electricity or for some other reason, the rise in the electric power would also denote rise in the produced heat energy. The adjusting means provide an excellent opportunity in such a situation to conduct the produced excess heat to another district heating network. A third example of the use of the adjusting means concerns malfunction, service and repair situations of the heat pump apparatus. In this case, the adjusting means allow heating of the second district heating network without interruptions.

Typically, the large temperature difference between the heat-releasing main return flow of the first network and the main supply flow of the second network to be heated sets down requirements for the structure and the operation of the heat pump in the heat pump apparatus. For example, a problem with the normal heat pump is that the efficiency i.e. the coefficient of performance stays low. Below, one heat pump arrangement is presented which is different from the regular heat pumps and suitable for the heat pump apparatus according to the invention, comprising at least two heat pumps.

In said heat pump arrangement, said heat pumps as well as the heat-releasing and the heat-receiving heating medium flows are coupled together to conduct a first heating medium flow successively from one heat pump to another in a first order and to conduct a second heating medium flow successively from one heat pump to another in a second order opposite to the first order, each heat pump being arranged to receive at the evaporator heat from the first heating medium flow and to release it at the condenser to the second heating medium flow to cool the first heating medium flow and respectively to heat the second heating medium flow gradually as the heating medium flows move forth from one heat pump to another. The first heating medium flow can be formed by the main return flow of the first district heating network. It may constitute this main return flow in its entirety or a subflow se-pratated from it. The heat-receiving second heating medium flow, on the other hand, refers to the main supply flow of the second district heating network. Of course, the heat pump arrangement may comprise, in addition to the heat pumps, the required number of various pipe or other parts, known per se, to provide said couplings.

In the heat pump arrangement described above, at least two cooling and heating steps performed successively upon the heating medium flows imply that the evaporators and the condensers of the heat pumps, respectively, are arranged to operate at different temperatures in different heat pumps. As is obvious to the person skilled in the art, the operating temperatures of the condensers and the evaporators, i.e. the condensation and the evaporation temperatures, can be tuned for instance by the choice of the employed refrigerant and by the pressures at the refrigerant circuit in the condenser and the evaporator. The heat-releasing first heating medium flow is first conducted in the arrangement according to the invention to a heat pump of the highest evaporation temperature and then to the following heat pumps in the order of their evaporation temperatures. Correspondingly, the heat-receiving second heating medium flow is conducted in the opposite order, i.e. from a heat pump of the lowest condensation temperature to the highest, and, as gradually heated in this manner, finally to the second heat storage.

In this heat pump arrangement, the refrigerant in each heat pump is selected to comply with the predetermined temperatures of the heating medium flows and with the pressures at the refrigerant circuit of the heat pump as well as with the desired coefficient of performance. Said predetermined temperatures of the heating medium flows include for example the lowest temperature to which the heat-releasing heating medium flow is to be cooled and on the other hand the highest temperature to which the heat-receiving heating medium flow is to be heated. These determine the lowest evaporation temperature and the highest condensation temperature of the heat pumps in the arrangement. On the other hand, the pressures at the refrigerant circuits may for example be preset with an upper limit so as to be able to contribute to the kinds of components to be used in the refrigerant circuit. The desired coefficient of performance of an individual pump or the entire arrangement determines how much heat is to be transmitted between the heating medium flows relative to the energy supplied from outside to the refrigerant circuit or the circuits. The essential feature in the described heat pump arrangement is that the refrigerant in each refrigerant circuit is selected so as to be optimized independently irrespective of the other refrigerant circuits.

In the arrangement according to the invention for connecting the district heating networks, the above-described heat pump arrangement provides considerable advantages as compared to the regular heat pumps. The objective of the arrangement according to the invention is typically to heat the main supply flow of the second district heating network to as high a temperature as possible and simultaneously to cool the main return flow of the first network to as low a temperature as possible. In other words, it is desirable to release heat at a temperature as high as possible and to receive it at a temperature as low as possible. With a regular single-circuit heat pump, the coefficient of performance i.e. the efficiency of the heat pump is inevitably reduced as the difference between these temperatures grows. In the preferred heat pump arrangement described above, the temperatures of the heating medium flows are changed gradually by dividing the heat transmission into a number of substeps performed by separate heat pumps, so that the heat pump in each step may be arranged to operate at a good coefficient of performance. On the other hand, distinct optimization of individual heat pumps also allows one to maintain the pressures of each refrigerant circuit reasonable so as to avoid the use of expensive special components to withstand unusually high pressure.

Said advantage of the good efficiency as compared with a regular single-circuit heat pump is particularly well manifested in the district heating arrangement of the invention when the condensation temperature at the heat pump of the highest condensation temperature is at least 75°C, preferably at least 80°C, and the evaporation temperature at the heat pump of the lowest evaporation temperature is at the most 45°C, preferably at the most 40°C. On the other hand, the maximum pressure at the refrigerant circuit and the maximum temperature of the refrigerant are preferably limited in all heat pumps to 25 bar at the maximum, preferably close to 20bar, and to 120°C, to avoid the need of the special components referred to above. The refrigerant reaches the maximum temperature right after the compressor, at which point the pressure is at the highest as well. This temperature may be slightly higher than the condensation temperature, in which case a superheated gas is provided. From this maximum temperature, the gas is cooled first to the condensation temperature, i.e. to saturation (e.g. 100-80C), and after that starts to release, as it condenses, heat energy at a constant temperature. The energy released by the gas as it cools depends on a number of factors but it is typically about 15% of the condensation energy.

In one preferred embodiment of the invention utilizing the heat pump arrangement described above, the refrigerant at the heat pump of the highest condensation temperature is 1,1,1,2,3,3,3-heptafluoropropane CF₃CHFCF₃ which is referred to in the commonly known refrigerant classification by code R227ea. The principal application of R227ea includes fire retardants and propellants used in medical aerosols. The inventors have now surprisingly discovered that it is extremely suitable for use in the above-described heat pump arrangement as a refrigerant at the high temperature refrigerant circuit. It allows for example a condensation temperature of more than 80°C at a reasonable pressure of about 20 bar. The same condensation temperature for example with ammonia NH₃ requires a pressure of up to 40 bar, in which case expensive special components that withstand high pressure, for example a high pressure compressor, are needed to implement the apparatus. R227ea is also reasonable as a refrigerant in terms of expenses, which is important in particular in the case of large industrial systems that need large amounts of the refrigerant.

In one preferred embodiment of the invention, the refrigerant at the refrigerant circuit of the lowest evaporation temperature is 1,1,1,2-tetrafluoroethane R134a.

In tests carried out to determine the operation of the above-described heat pump apparatus preferably used in the arrangement of the invention, an arrangement of two heat pumps with the refrigerant at the heat pump of the higher operating temperatures being R227ea and the refrigerant at the heat pump of the lower temperature being R134a was found as showing particularly good results.

Secondly, the invention also relates to a method for connecting a second district heating network to a first district heating network, both district heating networks comprising a heated main supply flow and a main return flow that has released heat, both formed by a heating medium, as well as an object supply flow conducted from the network's main supply flow to each object to be heated by that network and an object return flow that returns from the object after having released heat and is conducted to the main return flow of the network.

According to the invention, the method comprises heating, by means of a heat pump, the main supply flow of the second district heating network with heat derived from the main return flow of the first district heating network.

The method according to the invention preferably comprises adjusting the heat flows between the district heating networks, where necessary, by transmitting additional heat from the main supply flow of the first district heating network to the main supply flow of the second district heating network.

One preferred embodiment of the method according to the invention comprises the use of at least two heat pumps in heating the main supply flow of the second district heating network so that a first heating medium flow is conducted successively from one heat pump to another in a first order and a second heating medium flow is conducted successively from one heat pump to another in a second order opposite to the first order to cool the first heating medium flow and respectively to heat the second heating medium flow gradually as the heating medium flows move forth from one heat pump to another. In addition, this embodiment of the method comprises selecting the refrigerant of each heat pump so as to comply with the predetermined temperatures of the heating medium flows and with the pressure at the refrigerant circuit of the heat pump as well as with the desired coefficient of performance.

The details of the apparatuses required to carry out the method according to the invention as well as the advantages provided by the method comply with that described above in respect of the arrangement according to the invention.

### DETAILED DESCRIPTION OF THE INVENTION

In the following section, the invention will be described with reference to the accompanying figures which schematically present examples of possible embodiments of the invention.

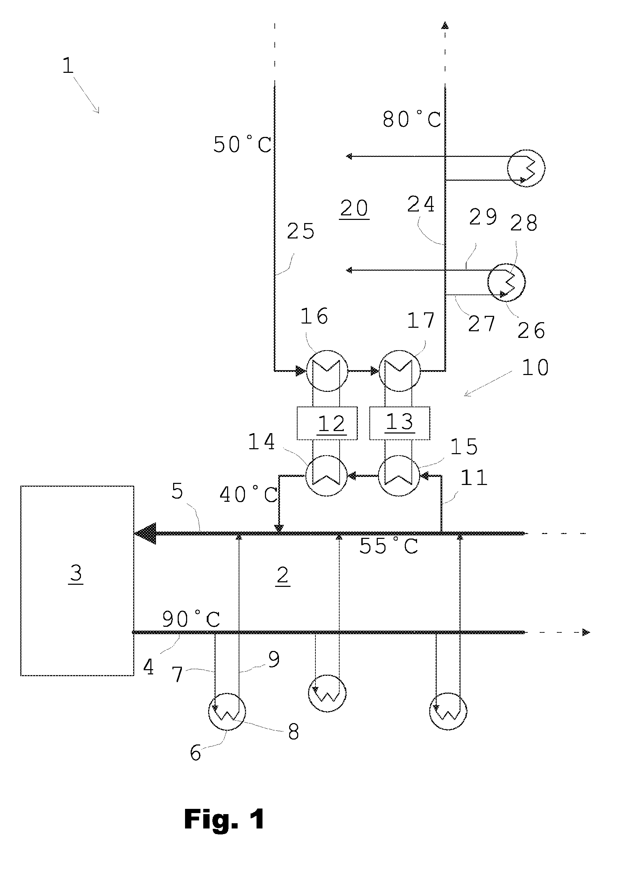

A district heating network 2 in the arrangement 1 described in Fig. 1 comprises a thermal power plant 3. Connected to the power plant is a main line of an original district heating network, comprising a heated main supply flow 4 that leaves the power plant and a cooled main return flow 5 that returns to the power plant. Connected to the main flows at each object 6 to be heated by district heat is an object supply flow 7 separated from the main supply flow 4 to the heating object to release heat thereto in a heat exchanger 8. After this, the water conducted to the object as the object supply flow returns to the main return flow 5 of the district heating network as a cooled object return flow 9. The temperature of the main supply flow heated by the power plant in the example of Fig. 1 is about 90°C. The operation of the heat exchangers in the heating objects is so designed that the temperature of the main return flow is about 55°C.

The arrangement of Fig. 1 also comprises a second district heating network 20, accordingly including a main supply flow 24, a main return flow 25 and objects 26 to be heated by this district heating network with object flows 27, 29 between the object and the main flows. The second district heating network 20 is connected to the first network 2 via a heat pump apparatus 10. The purpose of the heat pump apparatus is to transmit heat from the main return flow 5 of the first network 2 to the main supply flow 25 of the second network. Thus, the heat pump apparatus replaces the thermal power plant in the second district heating network, which is smaller than the first network, as the network's primary heat source.

To carry out said heat transmission between the networks the arrangement comprises a subflow 11 separated from the main return flow 5 of the first network and conducted to the heat pump apparatus and, after having released heat, further back to said main return flow.

The heat pump apparatus 10 comprises two heat pumps 12, 13. The subflow 11 is conducted to run successively from one heat pump evaporator 15 to another 14. The structures, the refrigerants and the operations of the heat pumps are so adapted that the operating temperatures of the evaporators 14, 15 and of the condensers 16, 17 of the pumps, i.e. the evaporation and the condensation temperatures of the refrigerant, are higher in the heat pump 13 on the inlet side of the subflow than in the other heat pump 12. In moving from one pump to another, the temperature of the subflow decreases step by step and pump by pump, and finally as it returns to the main return flow it is 40°C in this example. The main flows of the second district heating network 20 are associated to the heat pump apparatus 10 so that the main return flow 25 at 50°C first reaches the condenser 16 in the heat pump of the lower operating temperatures and then moves further to the condenser 17 in the heat pump of the higher operating temperatures and, having been heated to 80°C in two steps in the condensers, returns to the network as the main supply flow 24.

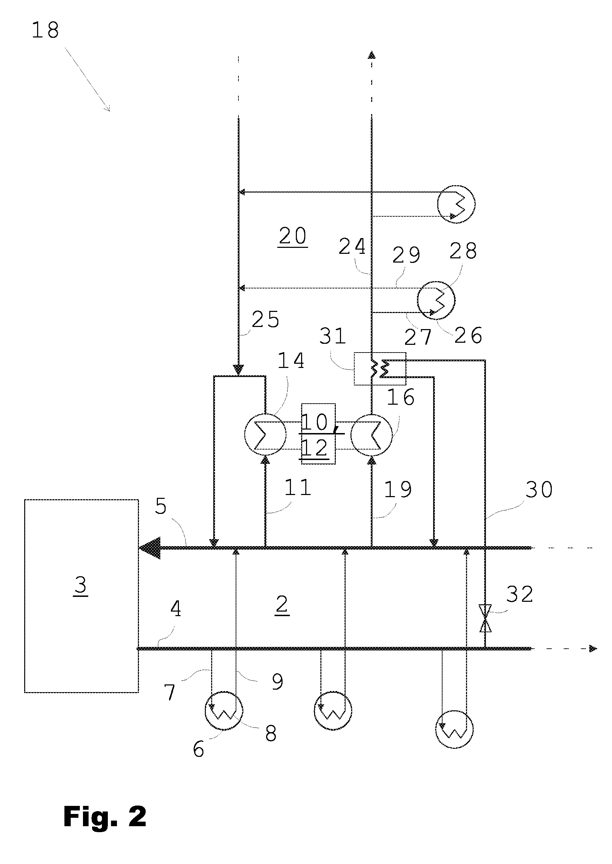

In the arrangement 18 of Fig. 2 the elements corresponding to Fig. 1 are indicated by the same reference numbers as in Fig. 1. The heat pump apparatus of the arrangement of Fig. 2 comprises only one heat pump 12. One difference in the arrangement of Fig. 2 as compared to Fig. 1 is that, in addition to the subflow 11 conducted to the evaporator 14 of the heat pump 12, a second subflow 19 has also been separated from the main return flow of the first district heating network 2. The second subflow is conducted to the condenser 16 of the heat pump 12 to be heated by heat derived from the first subflow. The second subflow itself heated in the condenser forms the main supply flow 24 of the second district heating network. The cooled main return flow is associated to the cooled first subflow in the evaporator 14 of the heat pump, after which they form together a flow which is returned to the main return flow 5 of the first district heating network.

The arrangement of Fig. 2 also comprises a subflow 30 derived from the main supply flow of the first district heating network 2 and coupled to the main supply flow 24 of the second network via a heat exchanger 31 to transmit heat directly from the main supply flow of the first network to the main supply flow of the second network so as to adjust the total heat flows in the arrangement as necessary. The subflow may be adjusted by a valve 32. An alternative for the heat transmission by heat exchanger would be to conduct the subflow so as to associate directly to the main supply flow of the second district heating network.

The common feature in the arrangements of Fig. 1 and 2 and in their use in connecting together two district heating networks, as in all of the other embodiments of the invention, is to transmit heat according to the fundamental principle of the invention by the heat pump from the main return flow of the first district heating network to the main supply flow of the second district heating network. Aside from this fundamental principle and the other characteristics of the invention defined by the claims, the details of the embodiments of the invention and e.g. the apparatuses required therein may vary freely and the solutions known per se may be utilized. Hence, the invention is by no means limited merely to the examples of Fig. 1 and 2.

## Claims

1. An arrangement (1) for connecting a second district heating network (20) to a first district heating network (2), both district heating networks comprising:
- a heated main supply flow (4, 24) and a main return flow (5, 25) that has released heat, both formed by a heating medium, and
- an object supply flow (7, 27) conducted from the main supply flow of the network to each object (6, 26) to be heated by the network and an object return flow (9, 29) that returns from the object after having released heat and is conducted to the main return flow of the network,
**characterized in that** the arrangement (1) comprises a heat pump apparatus (10, 12, 13) arranged to heat the main supply flow (24) of the second district heating network (20) by heat derived from the main return flow (5) of the first district heating network (2).

2. The arrangement (1) according to claim 1, **characterized in that** the arrangement (1) comprises adjusting means (30, 31, 32) to transmit additional heat from the main supply flow (4) of the first district heating network (2) to the main supply flow (24) of the second district heating network (20) so as to adjust the heat flows in the arrangement as necessary.

3. The arrangement (1) according to claim 1 or 2, **characterized in that**
- the heat pump apparatus (10) comprises at least two heat pumps (12, 13) coupled together to conduct a first heating medium flow (11) successively from one heat pump to another in a first order and to conduct a second heating medium flow (25) successively from one heat pump to another in a second order opposite to the first order to cool the first heating medium flow and respectively to heat the second heating medium flow gradually as the heating medium flows move forth from one heat pump to another, and that
- the refrigerant in each heat pump is selected so as to comply with the predetermined temperatures of the heating medium flows and with the pressure at the refrigerant circuit of the heat pump as well as with the desired coefficient of performance.

4. The arrangement (1) according to claim 3, **characterized in that** the condensation temperature in the heat pump (13) of the highest condensation temperature is at least 75°C, preferably at least 80°C, and the evaporation temperature in the heat pump (12) of the lowest evaporation temperature is at the most 45°C, preferably at the most 40°C.

5. The arrangement (1) according to claim 3 or 4, **characterized in that** the maximum pressure of the refrigerant circuit and the maximum temperature of the refrigerant in each heat pump (12, 13) is limited to not more than 25 bar and 120°C.

6. The arrangement (1) according to any one of claims 3 to 5, **characterized in that** the refrigerant in the heat pump (13) of the highest condensation temperature is 1,1,1,2,3,3,3-heptafluoropropane R227ea.

7. The arrangement (1) according to any one of claims 3 to 6, **characterized in that** the refrigerant in the heat pump (12) of the lowest evaporation temperature is 1,1,1,2-tetrafluoroethane R134a.

8. A method for connecting a second district heating network (20) to a first district heating network (2), both district heating networks comprising:
- a heated main supply flow (4, 24) and a main return flow (5, 25) that has released heat, both formed by a heating medium, and
- an object supply flow (7, 27) conducted from the main supply flow of the network to each object (6, 26) to be heated by the network and an object return flow (9, 29) that returns from the object after having released heat and is conducted to the main return flow of the network,
**characterized in that** the method comprises heating, by means of a heat pump (12, 13), the main supply flow (24) of the second district heating network (20) with heat derived from the main return flow (5) of the first district heating network.

9. The method according to claim 8, **characterized in that** the method comprises adjusting, if necessary, the heat flows between the district heating networks (2, 20) by transmitting additional heat from the main supply flow (4) of the first ditrict heating network (2) to the main supply flow (24) of the second district heating network (20).

10. The method according to claim 8 or 9, **characterized in that** at least two heat pumps (12, 13) are used in heating the main supply flow (24) of the second district heating network (20), so that a first heating medium flow (11) is conducted successively from one heat pump to another in a first order and a second heating medium flow (25) is conducted successively from one heat pump to another in a second order opposite to the first order to cool the first heating medium flow and respectively to heat the second heating medium flow gradually as the heating medium flows move forth from one heat pump to another, and that the refrigerant in each heat pump is selected so as to comply with the predetermined temperatures of the heating medium flows and with the pressure at the refrigerant circuit of the heat pump as well as with the desired coefficient of performance.
